# EUROPÄISCHE PATENTSCHRIFT

(11) **EP 3 136 367 B1**
(45) Veröffentlichungstag und Bekanntmachung des Hinweises auf die Patenterteilung: **07.12.2022**
(21) Anmeldenummer: 15465534.4
(22) Anmeldetag: 31.08.2015
(51) Int. Cl.: G08G 1/16, G08G 1/0962, G06K 9/00, G06T 7/00

(54) **FAHRZEUGKAMERAVORRICHTUNG SOWIE VERFAHREN ZUR ERFASSUNG EINES VORAUSLIEGENDEN UMGEBUNGSBEREICHS EINES KRAFTFAHRZEUGS**
VEHICLE CAMERA DEVICE AND METHOD FOR RECORDING AN AREA AHEAD OF A MOTOR VEHICLE
DISPOSITIF DE CAMERA DE VEHICULE ET PROCEDE DE DETECTION D'UNE ZONE ENVIRONNANTE ARRIERE D'UN VEHICULE AUTOMOBILE

(43) Veröffentlichungstag der Anmeldung: 01.03.2017
(73) Patentinhaber: Continental Autonomous Mobility Germany GmbH, 85057 Ingolstadt (DE)
(72) Erfinder: Miklos, Mihai, 300736 Timisoara (RO); Pahontu, Nicolae, 405100 Campia Turzii (RO)
(74) Vertreter: Continental Corporation

(56) Entgegenhaltungen:
- EP-A1- 1 991 973
- EP-A1- 2 487 906
- EP-B1- 1 991 973
- DE-A1-102011 078 615
- DE-A1-102013 113 960
- US-A1- 2009 195 410
- US-B1- 6 191 704

## Beschreibung

Die Erfindung betrifft eine Fahrzeugkameravorrichtung nach dem Oberbegriff des Anspruchs 1. Weiterhin betrifft die Erfindung ein Kraftfahrzeug mit der Fahrzeugkameravorrichtung sowie ein Verfahren zur Erfassung eines vorausliegenden Umgebungsbereichs des Kraftfahrzeugs.

Fahrzeugkameras dienen zur Erfassung relevanter Objekte wie z. B. Hindernisse, Ampeln, Fußgänger oder weitere Verkehrsteilnehmer in der Fahrzeugumgebung eines Kraftfahrzeugs. Die Objekterfassung erfolgt durch die Auswertung der von den Fahrzeugkameras aufgenommenen Bilder mittels Bildverarbeitungsverfahren. Durch die Objekterfassung ist es möglich in Kraftfahrzeugen verschiedene Fahrerassistenzfunktionen wie zum Beispiel einen Bremsassistenten oder einen Abstandswarner umzusetzen.

Die Druckschrift DE 10 2005 009 626 A1 beschreibt eine Kamera zum Verfolgen von Objekten mit einer Bildsensoreinheit zum Erzeugen von Bilddaten und einer Verarbeitungseinheit zum Verarbeiten der von der Bildsensoreinheit an die Verarbeitungseinheit übergebenen Bilddaten. Die Verarbeitungseinheit weist eine ROI-Auswahleinheit zum Auswählen von für die Objektverfolgung interessanten Bildbereich und eine Tracking-Einheit auf, um Trackingdaten von zu verfolgenden Objekten anhand der Bilddaten zu ermitteln.

Die EP 1 991 973 A1 beschreibt ein Bildverarbeitungssystem, welches eine vordere Überwachungsvorrichtung, die ein Bild einer Sicht vor einem Fahrzeug aufnimmt, eine Fahrzeugpositionsbe- . stimmungsvorrichtung, die die Position und Orientierung des Fahrzeugs bestimmt, eine Kartendatenbank, die eine Straßenkarte speichert, einen Verkehrssignalanlagen-Positionsschätzteil, der die Position einer Verkehrssignalanlage schätzt, einen Bildverarbeitungsregioneinstellteil, der in dem von der vorderen Überwachungsvorrichtung aufgenommenen Bild eine Bildverarbeitungsregion vorgibt, über welche eine vorgegebene Bildverarbeitung basierend auf der Position der Verkehrssignalanlage, die von dem Verkehrssignalanlagen-Positionsschätzteil geschätzt worden ist, durchgeführt wird, und einen Verkehrssignalanlagen-Erkennungsteil aufweist, der die Verkehrssignalanlage in der Bildverarbeitungsregion durch die vorgegebene Bildverarbeitung erkennt.

Der Erfindung liegt die Aufgabe zugrunde, eine Fahrzeugkameravorrichtung sowie ein entsprechendes Verfahren vorzuschlagen, welche eine schnelle und zuverlässige Auswertung von Zielobjekten erzielt.

Diese Aufgabe wird durch eine Fahrzeugkameravorrichtung mit den Merkmalen des Anspruchs 1, durch ein Kraftfahrzeug mit den Merkmalen des Anspruchs 6 sowie durch ein Verfahren mit den Merkmalen des Anspruchs 7 gelöst. Vorteilhafte oder bevorzugte Ausführungsformen der Erfindung sind in den Unteransprüchen, der nachfolgenden Beschreibung und durch die Figuren dargelegt.

Es wird eine Fahrzeugkameravorrichtung zur Erfassung einer vorausliegenden Fahrzeugumgebung eines Kraftfahrzeugs vorgeschlagen. Bei der vorausliegenden Fahrzeugumgebung handelt es sich insbesondere um einen in Fahrtrichtung des Kraftfahrzeugs vorausliegenden Umgebungsbereich. Vorzugsweise ist die Fahrzeugkameravorrichtung in einem Kraftfahrzeug integrierbar oder integriert. Insbesondere ist die Fahrzeugkameravorrichtung in ihrer Lage unverstellbar, somit im Speziellen um eine Rotations-, Längs-, Querachse und sonstigen Achsen bewegungsfrei im Kraftfahrzeug integriert. Z. B. ist die Fahrzeugkameravorrichtung an einer Windschutzscheibe des Kraftfahrzeugs anordbar oder angeordnet. Beispielsweise ist die Fahrzeugkameravorrichtung mit einer Festbrennweite ausgebildet. Die Fahrzeugkameravorrichtung kann z. B. eine Mono- oder eine Stereokamera sein.

Die Fahrzeugkameravorrichtung umfasst eine Bildsensoreinrichtung wie z. B. einen CMOS-Sensor zur Aufnahme von Bildern der vorausliegenden Fahrzeugumgebung insbesondere während einer Fahrt des Kraftfahrzeugs auf einer Fahrbahn. Weiterhin umfasst die Fahrzeugkameravorrichtung eine Bildauswerteeinrichtung zur Auswertung mindestens eines vorgegebenen Zielobjekts in mindestens einem vorbestimmten Verkehrsbereich. Beispielsweise ist die Bildauswerteeinrichtung mit einer Fahrerassistenzeinrichtung des Kraftfahrzeugs zur Übermittlung des mindestens einen ausgewerteten vorgegebenen Zielobjekts verbunden. Bei dem vorbestimmten Verkehrsbereich handelt es sich insbesondere um einen Bereich im Straßenverkehr, bei dem das vorbestimmte Zielobjekt voraussichtlich, somit mit großer Wahrscheinlichkeit zu finden ist. Mit anderen Worten ist der vorbestimmte Verkehrsbereich insbesondere ein für die Suche des Zielobjekts ausgewählter, festgelegter Verkehrsbereich. Besonders bevorzugt ist der mindestens eine vorbestimmte Verkehrsbereich ein Fahrbahnrand-, ein Fußgängerweg- und/oder ein Ampelanlagenbereich. Insbesondere handelt es sich bei dem vorgegebenen Zielobjekt um ein zur Umsetzung der Fahrerassistenzfunktion der Fahrerassistenzeinrichtung ausgewähltes Zielobjekt. Bei dem Zielobjekt handelt es sich beispielsweise um mindestens einen Fußgänger, ein Verkehrszeichen, eine Ampel, ein Kraftfahrzeug, einen Fahrradfahrer, Wild und/oder um weitere Verkehrsteilnehmer. Vorzugsweise wird das Zielobjekt mittels einer Bildverarbeitung, z. B. mittels eines Algorithmus wie ein Muster-und/oder Farberkennungsalgorithmus durch die Bildauswerteeinrichtung ausgewertet.

Vorzugsweise umfasst die Fahrzeugkameravorrichtung eine Ortungseinrichtung zur Bestimmung der aktuellen Position, somit des aktuellen Standorts der Fahrzeugkameravorrichtung und folglich insbesondere des Kraftfahrzeugs, in dem die Fahrzeugkameravorrichtung integriert ist.

Die Bildauswerteeinrichtung ist ausgebildet, einen vom Kraftfahrzeug vorausliegenden Fahrbahnverlauf sowie einen oder mehrere entlang des vorausliegenden Fahrbahnverlaufs vorliegende vorbestimmte Verkehrsbereiche ausgehend von der aktuellen Position, optional ergänzend ausgehend von einer Bewegungsrichtung und optional ergänzend ausgehend von einem Lagewinkel des Kraftfahrzeugs auf der Fahrbahn auszuwerten.

Die Bildauswerteeinrichtung ist ausgebildet, in den von der Bildsensoreinrichtung aufgenommenen Bildern in Abhängigkeit des ausgewerteten vorausliegenden Fahrbahnverlaufs jeweils mindestens einen Bildausschnitt mit den entlang des vorausliegenden Fahrbahnverlaufs ausgewerteten vorbestimmten Verkehrsbereichen zu ermitteln. Somit ist der Bildausschnitt insbesondere derart ermittelt, dass der vorbestimmte Verkehrsbereich in dem Bildausschnitt vorliegt, sollte sich der vorbestimmte Verkehrsbereich innerhalb des Sichtfelds der Fahrzeugkamera befinden. Bei dem Bildausschnitt, auch bekannt unter dem Begriff Region of Interest (ROI), handelt es sich insbesondere um einen Teilbereich des Gesamtbereichs des jeweils aufgenommenen Bildes. Somit liegt kein statisch festgelegter, sondern insbesondere ein dynamisch sich ändernder Bildausschnitt vor, welcher durch die Bildauswerteeinrichtung in Abhängigkeit des Fahrbahnverlaufs und folglich insbesondere an die abhängig vom Fahrbahnverlauf verändernde Perspektive auf den vorbestimmten Verkehrsbereich innerhalb des jeweiligen Bildes angepasst ist.

Weiterhin ist die Bildauswerteeinrichtung ausgebildet, die Auswertung des mindestens einen Zielobjekts auf den mindestens einen ermittelten Bildausschnitt, somit auf den in dem jeweiligen Bild ermittelten vorbestimmten Verkehrsbereich zu priorisieren oder zu beschränken. Unter der Priorisierung ist für die Auswertung des mindestens einen vorgegebenen Zielobjekts vorzugsweise eine in dem Bildausschnitt ausführlichere und folglich mit einem höheren Rechenaufwand verbundene Suche nach den vorgegebenen Zielobjekten als im restlichen Bildbereich des jeweiligen Bildes zu verstehen. Somit ist vorzugsweise im restlichen Bildbereich der Suchaufwand reduziert. Unter der Beschränkung ist für die Auswertung des mindestens einen vorgegebenen Zielobjekts insbesondere eine ausschließliche Suche nach dem Zielobjekt in dem Bildausschnitt zu verstehen. Somit wird vorzugsweise ausschließlich in diesem Bildausschnitt eine Auswertung des Zielobjekts durchgeführt, wohingegen eine Auswertung des Zielobjekts in dem restlichen Bildbereich des jeweiligen Bilds ausgeschlossen ist. Durch die erfindungsgemäße Fahrzeugkameravorrichtung ist einerseits eine zuverlässige Auswertung der Zielobjekte erzielt, andererseits der für die Auswertung der Zielobjekte erforderliche Rechenaufwand reduziert.

Beispielsweise sind die vorgegebenen Zielobjekte in einer Datenbank z. B. mit Ortungsdaten hinterlegt und durch die Bildauswerteeinrichtung abrufbar. Beispielsweise ist die Bildauswerteeinrichtung ausgebildet, den vorbestimmten Verkehrsbereich anhand der abgerufenen Zielobjekte zu bestimmen und folglich den Bildausschnitt zu ermitteln.

Erfindungsgemäss handelt es sich bei dem vorbestimmten Verkehrsbereich um einen für die stets gleiche Relativposition zu und/oder auf der Fahrbahn charakteristischen Verkehrsbereich. Somit weist der vorbestimmte Verkehrsbereich bei Vorhandensein entlang der Fahrbahn zumindest annähernd, beispielsweise im Rahmen von höchstens zehn Metern, insbesondere von höchstens fünf Metern, im Speziellen von höchstens einem Meter die gleiche Relativposition zu und/oder auf der der Fahrbahn auf. Vorzugsweise ist die Relativposition des vorbestimmten Verkehrsbereichs zur Fahrbahn z. B. anhand eines charakteristischen Abstands des Zielobjekts zum Fahrbahnboden oder zu einer Fahrbahnmarkierung bekannt. Als mögliches Beispiel sei hier eine Ampel zu nennen, welche vertikal zum Fahrbahnboden in aller Regel den gleichen Abstand aufweist. Als ein weiteres mögliches Beispiel sei ein Fußgängerweg zu nennen, welcher in aller Regel einen horizontalen Abstand vom Fahrbahnrand von weniger als fünf Meter aufweist oder direkt an den Fahrbahnrand anschließt. Durch die bekannte, gleiche Relativposition ist der vorbestimmte, charakteristische Verkehrsbereich zuverlässig anhand des Fahrbahnverlaufs der Fahrbahn zu bestimmen. Folglich verändern sich in den Bildern die Position und/oder die Perspektive des aufgenommenen Verkehrsbereichs insbesondere aufgrund einer Veränderung des vorausliegenden Fahrbahnverlaufs der Fahrbahn, so z. B. bei Kurven, Steigungen und/oder bei einer Veränderung der Fahrbahnbreite. Eine geradlinig verlaufende und/oder mit einer konstanten Fahrbahnbreite verlaufende Fahrbahn hingegen führt in den Bildern zu keiner Veränderung der Position und/oder der Perspektive des aufgenommenen Verkehrsbereichs und folglich zu keiner Veränderung des ermittelten Bildausschnitts in den Bildern.

Vor diesem Hintergrund ist es Teil der Erfindung, , dass bei einem geradlinigen Fahrbahnverlauf und/oder bei einer konstanten Fahrbahnbreite die Position, die Form und/oder die Größe des mindestens einen ermittelten Bildausschnitts, alternativ oder optional ergänzend die Anzahl an ermittelten Bildausschnitten unverändert bleibt.

Weiterhin ist es Teil der Erfindung, dass die Position, die Form und/oder die Größe des mindestens einen Bildausschnitts, alternativ oder optional ergänzend die Anzahl an Bildausschnitten an die sich bei einer Kurve, einer Steigung und/oder bei einer Neigung im Fahrbahnverlauf in den Bildern veränderte Position und/oder Perspektive des mindestens einen aufgenommenen Verkehrsbereichs durch die Bildauswerteeinrichtung angepasst sind. Somit ist durch die erfindungsgemäße Fahrzeugkameravorrichtung einerseits durch die beschränkte bzw. priorisierte Auswertung des Zielobjekts in dem mindestens einen ermittelten Bildausschnitt der Rechenaufwand beschränkt, andererseits durch die stetige Anpassung des Bildausschnitts in Abhängigkeit der charakteristischen Relativposition des vorbestimmten Verkehrsbereichs zur Fahrbahn die Auswertung der vorgegebenen Zielobjekte in den vorbestimmten Verkehrsbereichen sichergestellt.

Bevorzugt umfasst die Fahrzeugkameravorrichtung elektronisches Kartenmaterial mit Informationsdaten, mittels diesen der vorausliegende Fahrbahnverlauf und die entlang des vorausliegenden Fahrbahnverlaufs vorliegenden Verkehrsbereiche durch die Bildauswerteeinrichtung bestimmbar sind. Besonders bevorzugt umfasst das elektronische Kartenmaterial Wegdaten zum Verkehrswegenetz, somit Daten zu den Fahrbahnverläufen von Fahrbahnen wie z. B. von Landstraßen, Innortsstraßen und Autobahnen. Weiterhin umfasst das elektronische Kartenmaterial insbesondere Straßengeometriedaten wie z. B. Daten zur Fahrbahnbreite und/oder Fahrspurbreite. Alternativ oder optional ergänzend umfasst das elektronische Kartenmaterial topographische Daten, somit Daten zum Höhenverlauf der Fahrbahnen. Durch die Bestimmung des Fahrbahnverlaufs und der entlang des Fahrbahnverlaufs vorliegenden vorbestimmten Verkehrsbereiche ist eine aufwändige Auswertung in den von der Bildsensoreinrichtung aufgenommenen Bildern vermieden. Folglich ist die schnelle und zuverlässige Auswertung der Zielobjekte in dem mindestens einen Bildausschnitt umsetzbar.

Vorzugsweise ist die Bildauswerteeinrichtung mittels der bestimmten Position des Kraftfahrzeugs auf der Fahrbahn sowie mittels der Informationsdaten des elektronischen Kartenmaterials ausgebildet, die aktuelle Position und optional ergänzend die Bewegungsrichtung des Kraftfahrzeugs auf der Fahrbahn auszuwerten. Anhand der ausgewerteten aktuellen Position und optional ergänzend der Bewegungsrichtung des Kraftfahrzeugs ist die Bildauswerteeinrichtung ausgebildet, den vorausliegenden Fahrbahnverlauf sowie die entlang des vorausliegenden Fahrbahnverlaufs vorliegenden vorbestimmten Verkehrsbereiche auszuwerten.

Bei einer bevorzugten Weiterbildung ist die Bildauswerteeinrichtung zusätzlich ausgebildet, einen Lagewinkel des Kraftfahrzeugs zu den entlang des vorausliegenden Fahrbahnverlaufs vorliegenden vorbestimmten Verkehrsbereichen auszuwerten. Beispielsweise werden eine Giergeschwindigkeit und/oder ein Lenkwinkel des Kraftfahrzeugs zur Auswertung des Lagewinkels ermittelt. Durch die Bestimmung des Lagewinkels kann eine höhere Positionsgenauigkeit des mindestens einen Bildausschnitts in den Bildern erzielt werden.

Weiterhin ist die Bildauswerteeinrichtung mittels der ermittelten Position des Kraftfahrzeugs und des ausgewerteten vorausliegenden Fahrbahnverlaufs insbesondere ausgebildet, eine Relativposition des Kraftfahrzeugs zu den entlang des vorausliegenden Fahrbahnverlaufs vorliegenden vorbestimmten Verkehrsbereichen auszuwerten. Anhand der ermittelten Relativposition ist es möglich, die Position des vorbestimmten Verkehrsbereichs in dem jeweils aufgenommenen Bild zu ermitteln. Insbesondere zur Bestimmung der Größe und Position des ermittelten vorbestimmten Verkehrsbereichs in dem jeweiligen Bild sind insbesondere Kameraparameter wie z. B. der Abbildungsmaßstab, der horizontalen Bildwinkel, der vertikale Bildwinkel, die Brennweite der Fahrzeugkameravorrichtung und/oder die Relativposition der Fahrzeugkameravorrichtung in dem Kraftfahrzeug bekannt.

Einen weiteren Gegenstand der Erfindung betrifft ein Kraftfahrzeug mit der Fahrzeugkameravorrichtung nach der vorhergehenden Beschreibung. Das Kraftfahrzeug umfasst eine Fahrerassistenzeinrichtung, wobei die Fahrzeugkameravorrichtung mit der Fahrerassistenzeinrichtung zur Übermittlung des mindestens einen Zielobjekts verbunden ist. Die Fahrerassistenzeinrichtung ist ausgebildet, in Abhängigkeit des mindestens einen von der Fahrzeugkameravorrichtung ausgewerteten und übermittelten Zielobjekts eine passive und/oder aktive Fahrerassistenzfunktion wie z. B. ein Abstandswarnung, eine Notbremsung oder ein autonomes Ausweichmanöver durchzuführen.

Ferner betrifft die Erfindung ein Verfahren zur Erfassung des vorausliegenden Umgebungsbereichs eines Kraftfahrzeugs mit der Fahrzeugkameravorrichtung nach der vorhergehenden Beschreibung. In einem ersten Schritt werden die Bilder des vorausliegenden Umgebungsbereichs aufgenommen. Weiterhin wird der vorausliegende Fahrbahnverlauf sowie die entlang des vorausliegenden Fahrbahnverlaufs vorliegenden vorbestimmten Verkehrsbereiche ausgehend von der aktuellen Position und optional ergänzend des aktuellen Lagewinkels des Kraftfahrzeugs auf der Fahrbahn ausgewertet. In einem nächsten Schritt wird in den Bildern jeweils der mindestens eine Bildausschnitt mit den entlang des Fahrbahnverlaufs ausgewerteten und in den Bildern vorliegenden vorbestimmten Verkehrsbereichen ermittelt. Weiterhin wird die Auswertung des vorgegeben Zielobjekts auf den mindestens einen ermittelten Bildausschnitt priorisiert oder beschränkt.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einer schematischen Blockdarstellung eine Fahrzeugkameravorrichtung;
- Figur 2: in einer Seitenansicht ein Kraftfahrzeug mit der Fahrzeugkameravorrichtung aus Figur 1 zur Ermittlung eines Bildausschnitts mit einem vorbestimmten Verkehrsbereich in Abhängigkeit eines ersten beispielhaften, vorausliegenden Fahrbahnverlaufs;
- Figur 3: das Kraftfahrzeug sowie den ersten beispielhaften vorausliegenden Fahrbahnverlauf aus Figur 2 in einer Seitenansicht;
- Figur 4: das Kraftfahrzeug mit der Fahrzeugkameravorrichtung aus Figur 1 zur Ermittlung eines Bildausschnitts mit einem vorbestimmten Verkehrsbereich in Abhängigkeit eines zweiten beispielhaften, vorausliegenden Fahrbahnverlaufs;
- Figur 5: das Kraftfahrzeug mit der Fahrzeugkameravorrichtung aus Figur 1 zur Ermittlung eines Bildausschnitts mit einem vorbestimmten Verkehrsbereich in Abhängigkeit eines dritten beispielhaften, vorausliegenden Fahrbahnverlaufs.

Einander entsprechende Teile sind in allen Figuren jeweils mit den gleichen Bezugszeichen versehen.

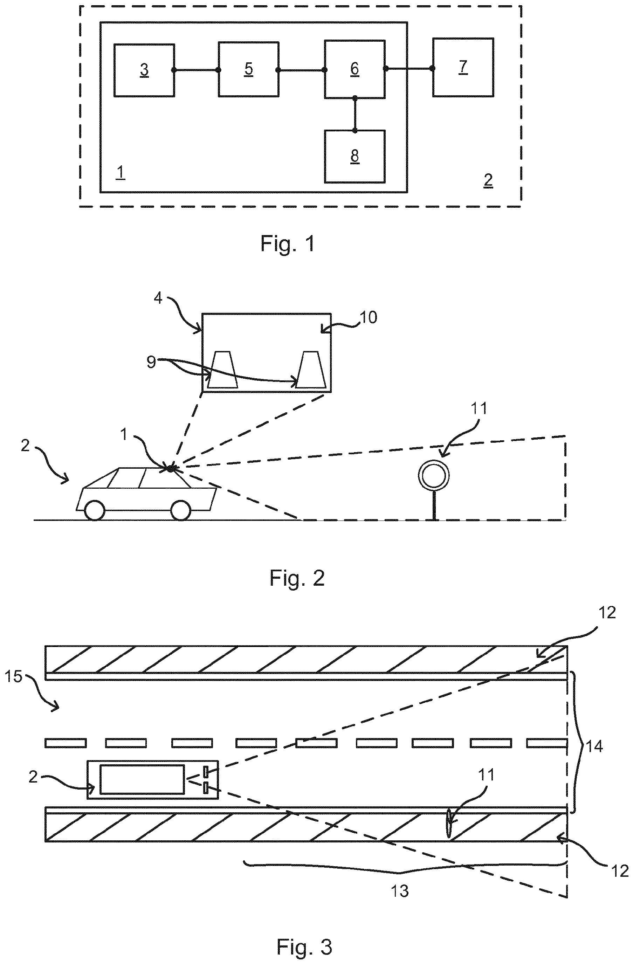

Figur 1 zeigt in einer schematischen Darstellung eine Fahrzeugkameravorrichtung 1, welche in einem Kraftfahrzeug 2 integriert ist. Die Fahrzeugkameravorrichtung 1 ist zur Erfassung einer vorausliegenden Fahrzeugumgebung des Kraftfahrzeugs 2, somit eines vorausliegenden Umgebungsbereichs des Kraftfahrzeugs 2 ausgebildet. Beispielsweise ist die Fahrzeugkameravorrichtung 1 im Innenraum des Kraftfahrzeugs 2 hinter der Windschutzscheibe angeordnet und in Fahrtrichtung des Kraftfahrzeugs 2 gerichtet. Die Fahrzeugkameravorrichtung 1 ist bewegungsfrei, mit anderen Worten fixiert, somit rotations- und verschiebungsfrei im Kraftfahrzeug 2 z. B. an der Windschutzscheibe angeordnet. Somit ist insbesondere der Blickwinkel der Fahrzeugkameravorrichtung 1 auf die vorausliegende Fahrzeugumgebung von der Position und dem Lagewinkel des Kraftfahrzeugs 2 auf einer Fahrbahn 15 abhängig.

Für die Aufnahme von Bildern 4 des vorausliegenden Umgebungsbereichs umfasst die Fahrzeugkameravorrichtung 1 eine Optik 3 zur Projektion von Licht sowie eine Bildsensoreinrichtung 5 zur Erfassung des von der Optik 3 projizierten Lichts. Beispielsweise ist ein Betrachtungsausschnitt gleichbleibend, sodass die Fahrzeugkameravorrichtung 1 insbesondere mit einer Festbrennweite ausgebildet ist.

Weiterhin umfasst die Fahrzeugkameravorrichtung 1 eine Bildauswerteeinrichtung 6, welche zur Auswertung von Zielobjekten 11 in mindestens einem vorbestimmten Verkehrsbereich 12 ausgebildet ist. Beispielsweise ist die Fahrzeugkameravorrichtung 1 mit einer Fahrerassistenzeinrichtung 7 des Kraftfahrzeugs 2 zur Übermittlung der ausgewerteten Zielobjekte 11 verbunden, sodass der Fahrerassistenzeinrichtung 7 ermöglicht ist, mittels der ausgewerteten Zielobjekte 11 eine entsprechende Fahrerassistenzfunktion wie z. B. eine Notfallbremsung bei einem ausgewerteten Verkehrshindernis umzusetzen.

Die Bildauswerteeinrichtung 6 ist ausgebildet, eine aktuelle Position des Kraftfahrzeugs 2 auf der Fahrbahn 15 zu bestimmen. Weiterhin ist die Bildauswerteeinrichtung 6 ausgebildet, anhand der bestimmten, aktuellen Position des Kraftfahrzeugs 2 den vorausliegenden Fahrbahnverlauf 13 sowie die entlang des vorausliegenden Fahrbahnverlaufs 13 vorliegenden vorbestimmten Verkehrsbereiche 12 auszuwerten. Bei dem vorbestimmten Verkehrsbereich 12 handelt es sich um einen festgelegten Wahrscheinlichkeitsbereich im Straßenverkehr, in dem das gesuchte, auszuwertende Zielobjekt 11 mit großer Wahrscheinlichkeit vorliegt, wie z. B. ein Verkehrszeichen am Fahrbahnrand. Zur Positionsbestimmung des Kraftfahrzeugs 2 umfasst die Fahrzeugkameravorrichtung 1 eine Ortungseinrichtung 8. Die Positionsbestimmung des Kraftfahrzeugs 2 erfolgt beispielsweise satellitenunterstützt mittels GPS.

Die Bildauswerteeinrichtung 6 umfasst elektronisches Kartenmaterial mit Informationsdaten zur Bestimmung des vorausliegenden Fahrbahnverlaufs 13 des Kraftfahrzeugs 2 und der entlang des vorausliegenden Fahrbahnverlaufs 13 vorliegenden Verkehrsbereiche 12. Das elektronische Kartenmaterial umfasst Wegdaten beispielsweise eines Verkehrswegenetzes, somit die Fahrbahnverläufe von Fahrbahnen wie z. B. Hauptstraßen, Nebenstraßen oder Autobahnen. Weiterhin umfasst das elektronische Kartenmaterial Straßengeometriedaten wie z. B. Daten zur Fahrbahnbreite und/oder Fahrspurbreite sowie topographische Daten, somit insbesondere Daten zum Höhenverlauf der Fahrbahn. Mittels der Ortungseinrichtung 8 und des elektronischen Kartenmaterials kann die aktuelle Position des Kraftfahrzeugs 2 auf der Fahrbahn 15 und somit der ausgehend von der aktuellen Position des Kraftfahrzeugs 2 vorausliegende Fahrbahnverlauf 13 mit den entlang des vorausliegenden Fahrbahnverlaufs vorliegenden vorbestimmten Verkehrsbereichen 12 ermittelt werden.

Die Bildauswerteeinrichtung 6 ist ausgebildet, in den aufgenommenen Bildern 4 in Abhängigkeit des vorausliegenden Fahrbahnverlaufs 13 jeweils mindestens einen Bildausschnitt 9 mit den ausgewerteten vorbestimmten Verkehrsbereichen 12 zu ermitteln. Bei den vorbestimmten Verkehrsbereichen 12 handelt es sich um Verkehrsbereiche, welche für die stets gleiche Relativposition auf und/oder zu der Fahrbahn 15 charakteristisch sind. Als mögliche Ausführungsbeispiele sei hier eine Ampel zu nennen, welche in einer bestimmten Höhe zur Fahrbahn 15 angeordnet ist. Somit kann bei der Auswertung des vorausliegenden Fahrbahnverlaufs 13 und optional der Fahrbahnbreite 14 der vorbestimmte Verkehrsbereich 12 anhand der bekannten, charakteristischen Relativposition ausgewertet werden.

Die Bildauswerteeinrichtung 6 ist ausgebildet, die Auswertung des Zielobjekts 11 auf den mindestens einen ermittelten Bildausschnitt 9 zu priorisieren oder zu beschränken. Somit erfolgt die Auswertung von potenziell vorhandenen Zielobjekten 11 in dem restlichen Bildbereich 10 mit einem Auswertungsalgorithmus von geringerer Komplexität als in dem Bildausschnitt 9 bzw. ist in dem restlichen Bildbereich 10 ausgeschlossen. Somit ist im Vergleich zu einer Suche des Zielobjekts 11 im gesamten Bildbereich des jeweiligen Bilds 4 der Bildverarbeitungsaufwand reduziert. Weiterhin ist durch die Auswertung der vorbestimmten, charakteristischen Verkehrsbereiche 12 eine zuverlässige Auswertung der Zielobjekte 11 trotz der Priorisierung bzw. Beschränkung in den Bildern 4 ermöglicht.

Weiterhin kann vorgesehen sein, die Giergeschwindigkeit und/oder den Lenkwinkel des Kraftfahrzeugs 2 auszuwerten, um einen Lagewinkel des Kraftfahrzeugs 2 auf der Fahrbahn 15 und somit die Relativposition zu den vorbestimmten Verkehrsbereichen 12 zu bestimmen. Auf diese Weise kann die Position und die Größe des vorbestimmten Verkehrsbereichs 12 in den Bildern 4 mit einer hohen Positionsgenauigkeit ermittelt werden. Der Lenkwinkel kann z. B. über Raddrehzahlsensoren des Kraftfahrzeugs 2 erfasst werden.

Mittels der Figuren 2 bis 4 soll die Abhängigkeit der Position, Größe und/oder die Anzahl der Bildausschnitte 9 von dem vorausliegenden Fahrbahnverlauf 13 näher erläutert werden.

In Figur 2 ist in einer Seitenansicht und in Figur 3 in einer Draufsicht das Kraftfahrzeug 2 auf der Fahrbahn 15 mit einem ersten beispielhaften vorausliegenden Fahrbahnverlauf 13 dargestellt. Der vorausliegende Fahrbahnverlauf 13 ist steigungs- und neigungsfrei sowie geradlinig verlaufend. Zudem weist die Fahrbahn 15 in dem vorausliegenden Fahrbahnverlauf 13 eine konstante Fahrbahnbreite 14 auf. Bei diesem Ausführungsbeispiel ist der vorbestimmte Verkehrsbereich 12 der Fahrbahnrand, hier gestrichelt dargestellt. Die Betrachtungsrichtung der Fahrzeugkameravorrichtung 1 ist durch die Position und den Lagewinkel des Kraftfahrzeugs 2 auf der Fahrbahn 15 derart, dass der gleichbleibende und geradlinige Fahrbahnverlauf 13 auf den Bildsensor mit den zwei Fahrbahnrändern projiziert ist. Somit sind in den Bildern 4 zwei Bildausschnitte 9 mit den zwei Fahrbahnrändern ermittelt. Die Bildausschnitte 9 sind trapezförmig ausgebildet, jedoch sind je nach dem vorbestimmten Verkehrsbereich 12 z. B. rechteckförmige, quadratische oder sonstige Formen ebenfalls möglich. Auszuwertende Zielobjekte 11 sind z. B. Verkehrszeichen, Wild, eine Person oder ein Fahrradfahrer. Rein schematisch ist ein von der Bildsensoreinrichtung 5 aufgenommenes Bild 4 dargestellt. Der geradlinige Fahrbahnverlauf 13 sowie die konstante Fahrbahnbreite 14 sind durch die Bildauswerteeinrichtung 6 wie zuvor beschrieben ausgewertet. Durch den geradlinigen Fahrbahnverlauf 13 sowie der konstanten Fahrbahnbreite 14 bleiben die Position sowie die Größe der Bildausschnitte 9 in den Bildern 4 unverändert.

Sollte die Fahrbahn 15 alternativ zur Figur 3 z. B. einen geradlinigen Fahrbahnverlauf 13, jedoch eine abnehmende Fahrbahnbreite 14 aufweisen, bleibt zwar die Größe der Bildausschnitte 9 in den Bildern 4 aufgrund der gleichbleibenden Perspektive unverändert, allerdings sind die Positionen der Bildausschnitte 9 zueinander angenähert.

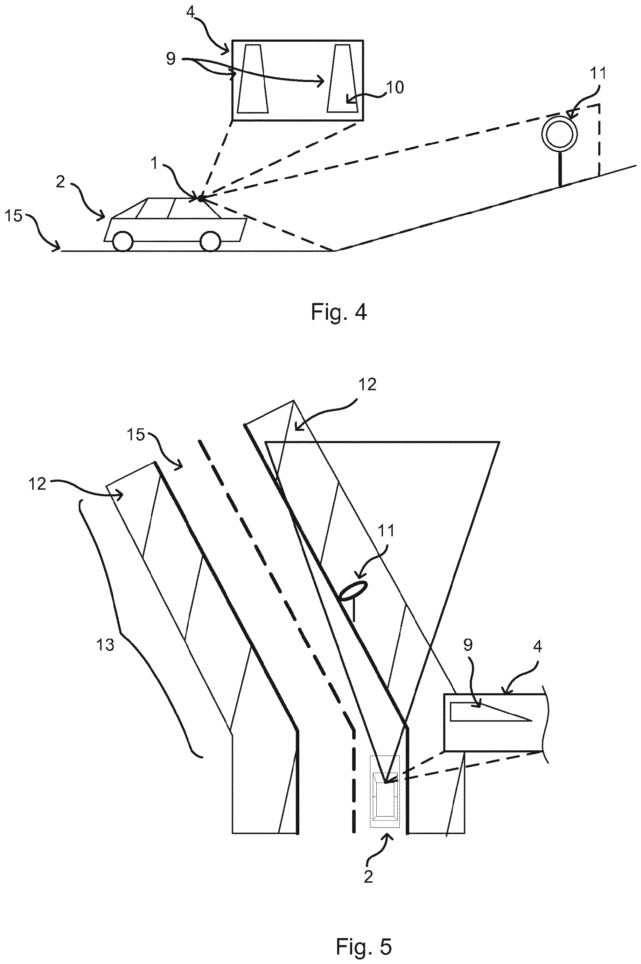

In Figur 4 ist in einer Seitenansicht das Kraftfahrzeug 2 auf der Fahrbahn 15 mit einem geradlinigen Fahrbahnverlauf 13, einer konstanten Fahrbahnbreite 14 und mit einer Steigung im Fahrbahnverlauf 13 dargestellt. Die Steigung ist beispielsweise mittels der topographischen Daten des elektronischen Kartenmaterials ausgewertet. Der geradlinige, steigende Fahrbahnverlauf 13 und die konstante Fahrbahnbreite 14 sind durch die Bildauswerteeinrichtung 6 ausgewertet. Die Betrachtungsrichtung der Fahrzeugkameravorrichtung 1 ist durch die Position und den Lagewinkel des Kraftfahrzeugs 2 auf der Fahrbahn 15 derart, dass der gleichbleibende und geradlinige Fahrbahnverlauf 13 auf den Bildsensor mit den zwei Fahrbahnrändern projiziert ist. Der ansteigende Fahrbahnverlauf 13 bewirkt im Vergleich zur Figur 3 eine Veränderung in der Perspektive auf den vorbestimmten Verkehrsbereich 12, so dass die hier in diesem Ausführungsbeispiel vorliegenden Fahrbahnränder in dem Bild 4 nach oben erstrecken. Somit sind die Bildausschnitte 9 durch den ansteigenden Fahrbahnverlauf 13 im Vergleich zu den in Figur 3 gezeigten Bildausschnitten 9 im Bild 4 nach oben erweitert, sodass eine frühzeitige Auswertung des Zielobjekts 11 ermöglicht ist.

In Figur 5 ist in einer Draufsicht das Kraftfahrzeug 2 auf der Fahrbahn 15 mit einer Kurve im Fahrbahnverlauf 13 dargestellt. Die Betrachtungsrichtung der Fahrzeugkameravorrichtung 1 ist durch die Position und den Lagewinkel des Kraftfahrzeugs 2 auf der Fahrbahn 15 derart, dass durch die Linkskurve im Fahrbahnverlauf 13 auf den Bildsensor der rechte Fahrbahnrand projiziert ist. Der kurvige Fahrbahnverlauf 13 bewirkt im Vergleich zur Figur 3 eine Veränderung der Perspektive des vorbestimmten Verkehrsbereichs 12, so dass der hier in diesem Ausführungsbeispiel vorliegende Fahrbahnrand in dem Bild 4 sich nach rechts erstreckt. Somit ist der Bildausschnitt 9 im Vergleich zu dem in Figur 3 gezeigten Bildausschnitt 9 nach rechts erstreckend vergrößert.

Es kann vorgesehen sein, dass in Abhängigkeit der Straßenart und in Abhängigkeit der Fahrerassistenzfunktionen der Fahrerassistenzeinrichtung 7 vorbestimmte Verkehrsbereiche 12 hinzugefügt oder entfernt werden. Bei den in Figur 2 bis 5 gezeigten Ausführungsbeispielen handelt es sich bei der Fahrbahn 15 beispielsweise um eine Außerortsstraße. Sollte das Kraftfahrzeug 2 auf eine Autobahn auffahren, wäre es z. B. möglich, einen Bildausschnitt 9 für Anzeigebrücken mit angebrachten elektronischen Tafeln, welche Verkehrszeichen, Gebote und/oder Verbote anzeigen, vorzusehen. Auf diese Weise ist die Auswertung auf bestimmten Fahrbahnen 15 ohne das Vorkommen der vorbestimmten Verkehrsbereiche 12 ausgeschlossen und folglich ein unnötiger Rechenaufwand vermieden.

### Bezugszeichenliste

- 1: Fahrzeugkameravorrichtung
- 2: Kraftfahrzeug
- 3: Optik
- 4: Bild
- 5: Bildsensoreinrichtung
- 6: Bildauswerteeinrichtung
- 7: Fahrerassistenzeinrichtung
- 8: Ortungseinrichtung
- 9: Bildausschnitt
- 10: Restlicher Bildbereich
- 11: Zielobjekt
- 12: Vorbestimmter Verkehrsbereich
- 13: Vorausliegender Fahrbahnverlauf
- 14: Fahrbahnbreite
- 15: Fahrbahn

## Patentansprüche

1. Fahrzeugkameravorrichtung (1) zur Erfassung einer vorausliegenden Fahrzeugumgebung eines Kraftfahrzeugs (2),
mit einer Bildsensoreinrichtung (5) zur Aufnahme von Bildern der vorausliegenden Fahrzeugumgebung,
mit einer Bildauswerteeinrichtung (6) zur Auswertung mindestens eines vorgegebenen Zielobjekts (11) in mindestens einem vorbestimmten Verkehrsbereich (12),
wobei die Bildauswerteeinrichtung (6) ausgebildet ist, einen vorausliegenden Fahrbahnverlauf (13) sowie entlang des vorausliegenden Fahrbahnverlaufs (13) vorliegende vorbestimmte Verkehrsbereiche (12) ausgehend von der aktuellen Position des Kraftfahrzeugs (2) auf einer Fahrbahn (15) auszuwerten,
wobei die Bildauswerteeinrichtung (6) ausgebildet ist, in den aufgenommenen Bildern (4) in Abhängigkeit des vorausliegenden Fahrbahnverlaufs (13) jeweils mindestens einen Bildausschnitt (9) mit den ausgewerteten vorbestimmten Verkehrsbereichen (12) zu ermitteln und die Auswertung des vorgegebenen Zielobjekts (11) auf den mindestens einen ermittelten Bildausschnitt (9) zu priorisieren oder zu beschränken, wobei bei einem geradlinigen Fahrbahnverlauf und/oder einer konstanten Fahrbahnbreite (14) die Position, die Form, die Größe des mindestens einen Bildausschnitts (9) und/oder die Anzahl an Bildausschnitten (9) unverändert bleiben, und wobei
die Form des mindestens einen Bildausschnitts (9) an eine sich bei einer Kurve, einer Steigung und/oder bei einer Neigung im Fahrbahnverlauf (13) in den Bildern (4) veränderte Position und/oder Perspektive des mindestens einen vorbestimmten Verkehrsbereichs (12) durch die Bildauswerteeinrichtung (6) angepasst ist, wobei der mindestens eine vorbestimmte Verkehrsbereich (12) entlang der Fahrbahn eine gleiche Relativposition zu der Fahrbahn aufweist.

2. Fahrzeugkameravorrichtung (1) nach Anspruch 1, wobei die Fahrzeugkameravorrichtung (1) eine Ortungseinrichtung (8) zur Bestimmung der aktuellen Position des Kraftfahrzeugs (2) sowie elektronisches Kartenmaterial mit Informationsdaten zur Bestimmung des vorausliegenden Fahrbahnverlaufs (13) des Kraftfahrzeugs (2) sowie der entlang des vorausliegenden Fahrbahnverlaufs (13) vorliegenden vorbestimmten Verkehrsbereiche (12) umfasst, wobei die Bildauswerteeinrichtung (6) mittels der bestimmten Position des Kraftfahrzeugs (2) auf der Fahrbahn (15) sowie mittels der Informationsdaten des elektronischen Kartenmaterials ausgebildet ist, den vorausliegenden Fahrbahnverlauf (13) sowie die entlang des vorausliegenden Fahrbahnverlaufs (13) vorliegenden vorbestimmten Verkehrsbereiche (12) ausgehend von der aktuellen Position des Kraftfahrzeugs (2) auszuwerten.

3. Fahrzeugkameravorrichtung (1) nach einem der vorhergehenden Ansprüche, wobei die Bildauswerteeinrichtung (6) ausgebildet ist, einen Lagewinkel des Kraftfahrzeugs (2) zu den entlang des vorausliegenden Fahrbahnverlaufs (13) vorliegenden vorbestimmten Verkehrsbereichen (12) auszuwerten.

4. Fahrzeugkameravorrichtung (1) nach einem der vorhergehenden Ansprüche, wobei der mindestens eine vorbestimmte Verkehrsbereich (12) ein Fahrbahnrandbereich, ein Fußgängerwegbereich und/oder ein Ampelanlagenbereich ist.

5. Fahrzeugkameravorrichtung (1) nach einem der vorhergehenden Ansprüche, wobei das mindestens eine Zielobjekt (11) ein Fußgänger, ein Verkehrszeichen, eine Ampel, ein Kraftfahrzeug und/oder ein Fahrradfahrer ist.

6. Kraftfahrzeug (2) mit einer Fahrzeugkameravorrichtung (1) nach einem der vorhergehenden Ansprüche sowie mit einer Fahrerassistenzeinrichtung (7), wobei die Fahrerassistenzeinrichtung (7) ausgebildet ist, in Abhängigkeit des von der Fahrzeugkameravorrichtung (1) übermittelten und ausgewerteten Zielobjekts (11) eine Fahrerassistenzfunktion durchzuführen.

7. Verfahren zur Erfassung eines vorausliegenden Umgebungsbereichs eines Kraftfahrzeugs (2) mit einer Fahrzeugkameravorrichtung (1), umfassend die Schritte:
a) Aufnahme von Bildern (4) des vorausliegenden Umgebungsbereichs;
b) Auswertung eines vorausliegenden Fahrbahnverlaufs (13) sowie von entlang des vorausliegenden Fahrbahnverlaufs (13) vorliegenden vorbestimmten Verkehrsbereichen (12) ausgehend von der aktuellen Position des Kraftfahrzeugs (2) auf einer Fahrbahn (15);
c) Ermittlung mindestens eines Bildausschnitts (9) mit den ausgewerteten vorbestimmten Verkehrsbereichen (12);
d) Priorisierung oder Beschränkung der Auswertung des vorgegebenen Zielobjekts (11) auf den mindestens einen ermittelten Bildausschnitt (9), wobei bei einem geradlinigen Fahrbahnverlauf und/oder einer konstanten Fahrbahnbreite (14) die Position, die Form, die Größe des mindestens einen Bildausschnitts (9) und/oder die Anzahl an Bildausschnitten (9) unverändert bleiben, und wobei die Form des mindestens einen Bildausschnitts (9) an eine sich bei einer Kurve, einer Steigung und/oder bei einer Neigung im Fahrbahnverlauf (13) in den Bildern (4) veränderte Position und/oder Perspektive des mindestens einen vorbestimmten Verkehrsbereichs (12) durch die Bildauswerteeinrichtung (6) angepasst wird, wobei der mindestens eine vorbestimmte Verkehrsbereich (12) entlang der Fahrbahn eine gleiche Relativposition zu der Fahrbahn aufweist.

## Claims

1. Vehicle camera apparatus (1) for capturing a vehicle environment lying ahead of a motor vehicle (2),
having an image sensor device (5) for recording images of the vehicle environment lying ahead,
having an image evaluation device (6) for evaluating at least one specified target object (11) in at least one predetermined traffic region (12),
wherein the image evaluation device (6) is configured to evaluate a driving surface course (13) lying ahead and also predetermined traffic regions (12) present along the driving surface course (13) lying ahead starting from the current position of the motor vehicle (2) on a driving surface (15),
wherein the image evaluation device (6) is configured to ascertain in each case at least one image section (9) with the evaluated predetermined traffic regions (12) in the recorded images (4) in dependence on the driving surface course (13) lying ahead and to prioritize or to limit the evaluation of the specified target object (11) to the at least one ascertained image section (9), wherein, if the driving surface course is straight and/or the driving surface width (14) is constant, the position, the shape, the size of the at least one image section (9) and/or the number of image sections (9) remain unchanged, and wherein
the shape of the at least one image section (9) is matched by the image evaluation device (6) to a position and/or perspective of the at least one predetermined traffic region (12) that has changed in the images (4) in a bend, on an incline and/or on a decline in the driving surface course (13), wherein the at least one predetermined traffic region (12) along the driving surface has the same relative position with respect to the driving surface.

2. Vehicle camera apparatus (1) according to Claim 1, wherein the vehicle camera apparatus (1) comprises a localization device (8) for determining the current position of the motor vehicle (2) and electronic map material containing information data for determining the driving surface course (13) lying ahead of the motor vehicle (2) and also the predetermined traffic regions (12) present along the driving surface course (13) lying ahead, wherein the image evaluation device (6) is configured to evaluate, by means of the determined position of the motor vehicle (2) on the driving surface (15) and also by means of the information data of the electronic map material, the driving surface course (13) lying ahead and also the predetermined traffic regions (12) present along the driving surface course (13) lying ahead starting from the current position of the motor vehicle (2).

3. Vehicle camera apparatus (1) according to either of the preceding claims, wherein the image evaluation device (6) is configured to evaluate an orientation angle of the motor vehicle (2) to the predetermined traffic regions (12) present along the driving surface course (13) lying ahead.

4. Vehicle camera apparatus (1) according to any of the preceding claims, wherein the at least one predetermined traffic region (12) is a roadside region, a pavement region and/or a traffic light region.

5. Vehicle camera apparatus (1) according to any of the preceding claims, wherein the at least one target object (11) is a pedestrian, a traffic sign, a traffic light, a motor vehicle and/or a cyclist.

6. Motor vehicle (2) having a vehicle camera apparatus (1) according to any of the preceding claims and also having a driver assistance device (7), wherein the driver assistance device (7) is configured to perform a driver assistance function in dependence on the target object (11) transmitted and evaluated by the vehicle camera apparatus (1).

7. Method for capturing an environment region lying ahead of a motor vehicle (2) having a vehicle camera apparatus (1), comprising the steps of:
a) recording images (4) of the environment region lying ahead;
b) evaluating a driving surface course (13) lying ahead and also predetermined traffic regions (12) present along the driving surface course (13) lying ahead starting from the current position of the motor vehicle (2) on a driving surface (15);
c) ascertaining at least one image section (9) with the evaluated predetermined traffic regions (12);
d) prioritizing or limiting the evaluation of the specified target object (11) to the at least one ascertained image section (9), wherein, if the driving surface course is straight and/or the driving surface width (14) is constant, the position, the shape, the size of the at least one image section (9) and/or the number of image sections (9) remain unchanged, and wherein the shape of the at least one image section (9) is matched by the image evaluation device (6) to a position and/or perspective of the at least one predetermined traffic region (12) that has changed in the images (4) in a bend, on an incline and/or on a decline in the driving surface course (13), wherein the at least one predetermined traffic region (12) along the driving surface has the same relative position with respect to the driving surface.

## Revendications

1. Dispositif de caméra de véhicule (1) pour détecter un environnement de véhicule à venir d'un véhicule automobile (2), comprenant
un équipement de capteur d'image (5) pour enregistrer des images de l'environnement de véhicule à venir,
un équipement d'évaluation d'image (6) pour évaluer au moins un objet cible prédéfini (11) dans au moins une zone de circulation prédéterminée (12),
dans lequel l'équipement d'évaluation d'image (6) est réalisé pour évaluer un tracé de chaussée à venir (13) ainsi que des zones de circulation prédéterminées (12) présentes le long du tracé de chaussée à venir (13), en partant de la position actuelle du véhicule automobile (2) sur une chaussée (15),
dans lequel l'équipement d'évaluation d'image (6) est réalisé pour établir sur les images enregistrées (4), en fonction du tracé de chaussée à venir (13), respectivement au moins une partie d'image (9) comprenant les zones de circulation prédéterminées (12) évaluées, et pour rendre prioritaire ou limiter l'évaluation de l'objet cible prédéfini (11) à ladite au moins une partie d'image (9) établie, dans lequel la position, la forme, la taille de ladite au moins une partie d'image (9) et/ou le nombre de parties d'image (9) restent inchangées pour un tracé de chaussée droit et/ou une largeur de chaussée constante (14), et dans lequel
la forme de ladite au moins une partie d'image (9) est adaptée par l'équipement d'évaluation d'image (6) à une position et/ou perspective modifiée dans un virage, sur une montée et/ou sur une descente dans le tracé de chaussée (13) sur les images (4) de ladite au moins une zone de circulation prédéterminée (12), ladite au moins une zone de circulation prédéterminée (12) présentant le long de la chaussée une position relative identique par rapport à la chaussée.

2. Dispositif de caméra de véhicule (1) selon la revendication 1, dans lequel le dispositif de caméra de véhicule (1) comprend un équipement de localisation (8) pour déterminer la position actuelle du véhicule automobile (2), ainsi que des cartes électroniques comprenant des données d'information pour déterminer le tracé de chaussée à venir (13) du véhicule automobile (2) ainsi que les zones de circulation prédéterminées (12) présentes le long du tracé de chaussée à venir (13), dans lequel l'équipement d'évaluation d'image (6) est réalisé pour évaluer au moyen de la position déterminée du véhicule automobile (2) sur la chaussée (15) ainsi qu'au moyen des données d'information des cartes électroniques le tracé de chaussée à venir (13) ainsi que les zones de circulation prédéterminées (12) présentes le long du tracé de chaussée à venir (13), en partant de la position actuelle du véhicule automobile (2).

3. Dispositif de caméra de véhicule (1) selon l'une quelconque des revendications précédentes, dans lequel l'équipement d'évaluation d'image (6) est réalisé pour évaluer un angle de position du véhicule automobile (2) par rapport aux zones de circulation prédéterminées (12) présentes le long du tracé de chaussée à venir (13).

4. Dispositif de caméra de véhicule (1) selon l'une quelconque des revendications précédentes, dans lequel ladite au moins une zone de circulation (12) prédéterminée est une zone de bord de chaussée, une zone de trottoir et/ou une zone de feu de signalisation.

5. Dispositif de caméra de véhicule (1) selon l'une quelconque des revendications précédentes, dans lequel ledit au moins un objet cible (11) est un piéton, un panneau routier, un feu de signalisation, un véhicule automobile et/ou un cycliste.

6. Véhicule automobile (2) comprenant un dispositif de caméra de véhicule (1) selon l'une quelconque des revendications précédentes ainsi qu'un équipement d'assistance au conducteur (7), dans lequel l'équipement d'assistance au conducteur (7) est réalisé pour exécuter une fonction d'assistance au conducteur en fonction de l'objet cible (11) transmis et évalué par le dispositif de caméra de véhicule (1).

7. Procédé de détection d'une zone environnante à venir d'un véhicule automobile (2) à l'aide d'un dispositif de caméra de véhicule (1), comprenant les étapes consistant à :
a) enregistrer des images (4) de la zone environnante à venir ;
b) évaluer un tracé de chaussée à venir (13) ainsi que des zones de circulation prédéterminées (12) présentes le long du tracé de chaussée à venir (13), en partant de la position actuelle du véhicule automobile (2) sur une chaussée (15) ;
c) établir au moins une partie d'image (9) comprenant les zones de circulation prédéterminées (12) évaluées ;
d) rendre prioritaire ou limiter l'évaluation de l'objet cible prédéfini (11) à ladite au moins une partie d'image établie (9),
dans lequel la position, la forme, la taille de ladite au moins une partie d'image (9) et/ou le nombre de parties d'image (9) restent inchangées pour un tracé de chaussée droit et/ou une largeur de chaussée constante (14), et dans lequel la forme de ladite au moins une partie d'image (9) est adaptée par l'équipement d'évaluation d'image (6) à une position et/ou perspective, modifiée dans un virage, sur une montée et/ou sur une descente dans le tracé de chaussée (13) sur les images (4), de ladite au moins une zone de circulation prédéterminée (12), ladite au moins une zone de circulation prédéterminée (12) présentant le long de la chaussée une position relative identique par rapport à la chaussée.
